# EUROPEAN PATENT SPECIFICATION

(11) **EP 3 878 673 B1**
(45) Date of publication and mention of the grant of the patent: **19.04.2023**
(21) Application number: 18939615.3
(22) Date of filing: 08.11.2018
(51) Int. Cl.: B60K 6/365, B60K 1/02, B60K 6/22, F16H 3/44

(54) **HYBRID POWER MODULE AND VEHICLE**
HYBRIDLEISTUNGSMODUL UND FAHRZEUG
MODULE D'ALIMENTATION HYBRIDE ET VÉHICULE

(43) Date of publication of application: 15.09.2021
(73) Proprietor: Schaeffler Technologies AG & Co. KG, 91074 Herzogenaurach (DE)
(72) Inventor: XU, Junjie, Shanghai 201201 (CN); HUANG, Bo, Shanghai 201804 (CN)
(86) International application number: PCT/CN2018/114532
(87) International publication number: WO 2020/093302

(56) References cited:
- CN-A- 101 782 138
- CN-A- 101 922 535
- CN-A- 103 238 009
- CN-A- 103 857 549
- CN-U- 207 374 106
- US-A1- 2006 046 886
- US-A1- 2007 260 381
- US-A1- 2014 031 168
- US-B1- 6 478 705

## Description

### Technical Field

The present invention relates to the technical field of vehicles, and in particular, to a hybrid power module for a vehicle. The hybrid power module comprises a hybrid transmission and two motors. The present invention further particularly relates to a vehicle comprising the above-mentioned hybrid power module.

### Background

In a current plug-in hybrid drive system, two motors are provided to be connected to a hybrid transmission, and an internal combustion engine is connected to the hybrid transmission. Therefore, the hybrid transmission can implement a plurality of operating modes. In addition, in this design scheme, planetary gear mechanisms are often provided, because planetary transmission has the advantages of small mass, small size, high transmission ratio, high bearing capacity, smooth transmission, and high transmission efficiency compared with ordinary gear train. For example, U.S. Patent No. US 5558595 discloses a parallel hybrid transmission for a vehicle, wherein a planetary gear mechanism is provided in the hybrid transmission, and an internal combustion engine and two motors drive the vehicle via the hybrid transmission. For another example, a hybrid power module for a vehicle is also disclosed in Chinese patent application No. CN 107249917 A, wherein the hybrid power module has two sets of planetary gear mechanism, and two motors in the vehicle can transmit power to the two sets of planetary gear mechanism respectively. U.S. patent No. US 200726038 discloses an hybrid powertrain system having multiple torque-generative devices each operable to independently supply motive torque to the transmission device.

However, in the above-mentioned design scheme, both the internal combustion engine and the motor operating in an electric motor mode can only provide a single gear. On the one hand, it is insufficient to optimize an operating point of the internal combustion engine or the motor. On the other hand, the vehicle cannot provide sufficiently high speed during highspeed driving, and cannot provide enough torque during low-speed driving.

In addition, for example, while driving in cities, the efficiency of the internal combustion engine is very low due to the low vehicle speed. Therefore, it is often designed to disconnect the internal combustion engine from the hybrid transmission in this case and rely on only one motor operating in an electric motor mode to output torque. In this case, for example, due to the characteristics of the planetary gear mechanism, there is a case where the motor drives rotating parts in the hybrid transmission that are not used for power transmission at this moment to rotate together, which causes a large amount of rotational losses at this time.

### Summary

Therefore, the technical problem to be solved by the present invention is to provide a hybrid power module for a vehicle, so that the vehicle, particularly a hybrid vehicle, can balance the power performance and fuel economy in various driving conditions; and in addition, the hybrid power module can also reduce rotational losses.

The above-mentioned technical problems are solved by a hybrid power module for a vehicle. The hybrid power module comprises a hybrid transmission, a first motor and a second motor, wherein the hybrid transmission comprises a transmission input shaft connected to an internal combustion engine of the vehicle, a transmission output shaft, a first planetary gear mechanism connected to the transmission input shaft, a second planetary gear mechanism connected to the transmission output shaft, and a transmission housing; wherein the two sets of planetary gear mechanism each comprise a sun gear, a planetary carrier, and a ring gear, that is, the first planetary gear mechanism comprises a first sun gear, a first planetary carrier and a first ring gear, and the second planetary gear mechanism comprises a second sun gear, a second planetary carrier and a second ring gear.

According to the present invention, the transmission input shaft is rotationally fixedly connected to the first ring gear, power is transmitted between the first motor and the first sun gear, power is transmitted between the second motor and the second sun gear, and the transmission output shaft is rotationally fixedly connected to the second planetary carrier; wherein a first clutch, a second clutch and a third clutch are disposed in the hybrid transmission, wherein the first clutch can engage or disengage the second ring gear and the transmission housing, the second clutch can engage or disengage the first planetary carrier and the second ring gear, and the third clutch can engage or disengage the first planetary carrier and the second planetary carrier. Therefore, the hybrid power module according to the present invention can provide a plurality of power transmission paths. For example, when only the first clutch is engaged, the first planetary gear mechanism and the second planetary gear mechanism are disengaged. Particularly, when the vehicle is only driven by the second motor, components of the first planetary gear mechanism and the second ring gear can be prevented from rotating along with the second sun gear and the second planetary carrier, thereby effectively reducing rotational losses. As another example, when the first clutch and the third clutch are engaged, the two motors can provide greater torque to wheels when the vehicle speed is low. As a further example, when only the second clutch is engaged, a larger effective vehicle speed range can be provided when the vehicle speed is high. In the present invention, the "input" and "output" are descriptions based on the direction of power transmission in the hybrid transmission when the vehicle is driven by an internal combustion engine or a motor, which is not limited to the direction of power transmission on a transmission input part or a transmission output part under a specific operating mode. In addition, power can be exchanged between the first motor and the first sun gear, and between the second motor and the second sun gear. When the motor is running in an electric motor mode, the motor transmits power to the planetary gear mechanism, and when the motor is running in a generator mode, for example, when charging is performed by recovering surplus power, the planetary gear mechanism transmits power to the motor.

In a preferred embodiment, the second clutch and the third clutch are arranged on a common axis of rotation, which is favorable for saving arrangement space.

Preferably, the second clutch and the third clutch are connected to the first planetary carrier via a common transmission shaft. That is to say, the second clutch and the third clutch have two ends that can be engaged or disengaged, and one end of the second clutch and one end of the third clutch, which are connected to the first planetary carrier, are arranged on the transmission shaft. This is favorable for reducing the number of components of the hybrid power module.

Particularly preferably, the first planetary gear mechanism, the first motor, the second clutch and the third clutch are sequentially arranged on a common axis of rotation, wherein the first motor and the first sun gear transmit power via a first hollow motor shaft, and the transmission shaft extends through the first motor shaft and the first motor. For example, the first motor is a motor of an inner rotor type, the first hollow motor shaft and the rotor are connected along a common axis of rotation, and the transmission shaft extends radially inward of both the first motor shaft and the first motor, that is, the first motor shaft and the first motor are sleeved on the transmission shaft that is rotationally fixedly connected to the first planetary carrier. Therefore, a compact layout is achieved.

Advantageously, a connection part for rotationally fixedly connecting the third clutch to the second planetary carrier is located radially inward of a connection part for rotationally fixedly connecting the second clutch and the second ring gear, thereby being favorable for a compact connection.

In another preferred embodiment, the first planetary gear mechanism and the second planetary gear mechanism are arranged on a common axis of rotation. Therefore, the two sets of planetary gear mechanism are arranged regularly, which reduces the structural size of the hybrid power module.

In another preferred embodiment, the second clutch and the third clutch are provided between the first planetary gear mechanism and the second planetary gear mechanism, which is particularly favorable for the connection of the second clutch and the third clutch with the two sets of planetary gear mechanism.

In another preferred embodiment, the second planetary gear mechanism and the second motor are arranged on a common axis of rotation, and the second motor is located on one side of the second planetary gear mechanism away from the first planetary gear mechanism. For example, the second motor is of an inner rotor type, and this arrangement is favorable for fixing a stator of the second motor.

Preferably, the second motor and the second sun gear transmit power via a second hollow motor shaft, and the transmission output shaft extends through the second motor shaft and the second motor. The second hollow motor shaft and the rotor of the second motor are connected along a common axis of rotation, and the second motor shaft and the second motor are sleeved on the transmission output shaft, that is, the transmission output shaft extends radially inward of both the second motor shaft and the second motor. Therefore, a compact layout is achieved.

The above technical problem is also solved by a vehicle having the above-mentioned hybrid power module. Therefore, a vehicle, particularly a hybrid vehicle, in combination with different states of an internal combustion engine, a first motor, a second motor, and three clutches thereof, can provide a plurality of operating modes through the above-mentioned hybrid power module, such as a purely electric drive mode, a purely internal combustion engine drive mode, a hybrid drive mode, a recovery charging mode, and a standard charging mode. Therefore, a hybrid vehicle can balance power performance and fuel economy in various driving conditions; and in addition, the hybrid power module can also reduce rotational losses.

### Brief Description of the Drawings

Preferred embodiments of the present invention will be schematically illustrated below with reference to drawings. Drawings are as follows:

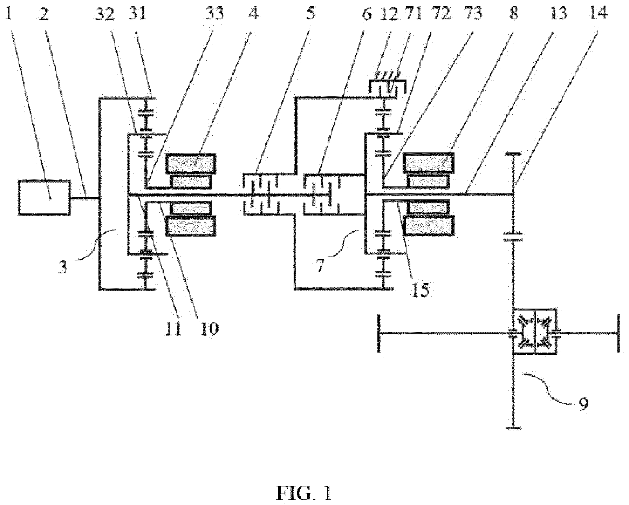

FIG. 1 is a schematic diagram of a hybrid power module according to a preferred embodiment of the present invention.

### Detailed Description

FIG. 1 schematically shows a hybrid power module according to a preferred embodiment of the present invention. The hybrid power module is used in a hybrid vehicle. As shown, the hybrid power module comprises a hybrid transmission, a first motor 4, and a second motor 8. The hybrid transmission comprises a transmission input shaft 2 connected to an internal combustion engine 1 of the vehicle, a first planetary gear mechanism 3, a second planetary gear mechanism 7, a first clutch 12, a second clutch 5, a third clutch 6, a transmission output shaft 13 for transmitting power to a differential mechanism 9, and a transmission housing.

In this preferred embodiment, the transmission input shaft 2, the first planetary gear mechanism 3, the first motor 4, the second clutch 5, the third clutch 6, the second planetary gear mechanism 7 and the second motor 8 are sequentially arranged along a common axis of rotation. The first planetary gear mechanism 3 comprises a first sun gear 33, a first planetary carrier 32, and a first ring gear 31. The second planetary gear mechanism 7 comprises a second sun gear 73, a second planetary carrier 72, and a second ring gear 71. Each of the three clutches 12, 5, and 6 has two ends that can be disengaged and engaged. The transmission input shaft 2 is rotationally fixedly connected to the first ring gear 31, the first motor 4 and the first sun gear 33 transmit power via a first hollow motor shaft 10, the second motor 8 and the second sun gear 73 transmit power via a second hollow motor shaft 15, the transmission output shaft 13 is rotationally fixedly connected to the second planetary carrier 72, and two ends of the first clutch 12 are connected to the second ring gear 71 and the transmission housing respectively, so that the second ring gear 71 and the transmission housing can be selectively connected. One end of the second clutch 5 is connected to the first planetary carrier 32 via a transmission shaft 11, and the other end thereof is connected to the second ring gear 71, so that the first planetary carrier 32 and the second ring gear 71 can be selectively connected. One end of the third clutch 6 is connected to the first planetary carrier 32 via the transmission shaft 11, and the other end thereof is connected to the second planetary carrier 72, so that the first planetary carrier 32 and the second planetary carrier 72 can be selectively connected. The transmission shaft 11 extends through the first motor shaft 10 and the first motor 4, and can transmit power between the first planetary carrier 32 and the second planetary gear mechanism 7. The transmission output shaft 13 extends through the second hollow motor shaft 15 and the second motor 8, and can output the power transmitted via the hybrid transmission to a next-stage transmission of the vehicle. For example, a transmission output gear 14 can be provided on the transmission output shaft 13 in a rotationally fixed manner, and the transmission output gear 14 is located on one side away from the second planetary gear mechanism 7 with respect to the second motor 8. Power can be transmitted to the differential mechanism 9 via the transmission output gear 14.

Therefore, the hybrid power module according to the preferred embodiment of the present invention can provide a plurality of power transmission paths. For example:
1) Only the first clutch 12 is engaged, and the second clutch 5 and the third clutch 6 remain disengaged. In this case, the first planetary gear mechanism 3 and the second planetary gear mechanism 7 are disengaged. When the vehicle is only driven by the second motor 8, components of the first planetary gear mechanism 3 and the second ring gear 71 can be prevented from rotating along with the second planetary gear mechanism 7, thereby effectively reducing rotational losses.
2) The first clutch 12 and the third clutch 6 are engaged, and the second clutch 5 remains disengaged. In this case, the second ring gear 71 is locked, power output by the internal combustion engine 1 and the first motor 4 is transmitted to the second planetary carrier 72 via the first planetary gear mechanism 3 and the transmission shaft 11, so that the power is directly transmitted to the transmission output shaft 13. Therefore, particularly when the vehicle speed is low, the first motor 4 and the second motor 8 can provide greater torque to wheels.
3) Only the second clutch 5 is engaged, and the first clutch 12 and the third clutch 6 remain disengaged. In this case, power output by the internal combustion engine 1 and the first motor 4 is transmitted to the second ring gear 71 via the first planetary gear mechanism 3 and the transmission shaft 11, and then in combination with the second motor 8, the power is transmitted to the second planetary carrier 72 via the second planetary gear mechanism 7, thereby being transmitted to the transmission output shaft 13. Therefore, the internal combustion engine 1 and the first motor 4 can provide a larger effective vehicle speed range when the vehicle speed is high.

Via the hybrid power module according to this preferred embodiment, it is possible to provide a plurality of operating modes based on different states of the internal combustion engine 1, the first motor 4, the second motor 11 and the clutches 12, 5 and 6, such as a purely electric drive mode, a purely internal combustion engine drive mode, a hybrid drive mode, a recovery charging mode, and a standard charging mode.

Although possible embodiments have been described illustratively in the above description, it should be understood that there are still a large number of embodiment variations through combinations of all known technical features and embodiments as well as those are readily apparent to those skilled in the art. In addition, it should be further understood that the exemplary embodiments are just examples and shall not in any way limit the scope of protection, application and construction of the present invention. The intention of the foregoing description is to provide those skilled in the art with a technical guide for converting at least one exemplary embodiment, in which various changes, especially changes in the functions and structures of the components, can be made as long as they do not depart from the scope of protection of the claims.

### List of Reference Numerals

- 1: Internal combustion engine
- 2: Transmission input shaft
- 3: First planetary gear mechanism
- 31: First ring gear
- 32: First planetary carrier
- 33: First sun gear
- 4: First motor
- 5: Second clutch
- 6: Third clutch
- 7: Second planetary gear mechanism
- 71: Second ring gear
- 72: Second planetary carrier
- 73: Second sun gear
- 8: Second motor
- 9: Differential mechanism
- 10: First motor shaft
- 11: Transmission shaft
- 12: First clutch
- 13: Transmission output shaft
- 14: Transmission output gear
- 15: Second motor shaft

## Claims

1. A hybrid power module for a vehicle, comprising a hybrid transmission, a first motor (4) and a second motor (8), wherein the hybrid transmission comprises a transmission input shaft (2) connected to an internal combustion engine (1) of the vehicle, a transmission output shaft (13), a first planetary gear mechanism (3) connected to the transmission input shaft (2), a second planetary gear mechanism (7) connected to the transmission output shaft (13), and a transmission housing; wherein the first planetary gear mechanism (3) comprises a first sun gear (33), a first planetary carrier (32), and a first ring gear (31); the second planetary gear mechanism (7) comprises a second sun gear (73), a second planetary carrier (72), and a second ring gear (71), wherein
the transmission input shaft (2) is rotationally fixedly connected to the first ring gear (31), power is transmitted between the first motor (4) and the first sun gear (33), power is transmitted between the second motor (8) and the second sun gear (73), and the transmission output shaft (13) is rotationally fixedly connected to the second planetary carrier (72),
wherein a first clutch (12), a second clutch (5) and a third clutch (6) are provided in the hybrid transmission, wherein the first clutch (12) can engage or disengage the second ring gear (71) and the transmission housing, the second clutch (5) can engage or disengage the first planetary carrier (32) and the second ring gear (71), and the third clutch (6) can engage or disengage the first planetary carrier (32) and the second planetary carrier (72).

2. The hybrid power module according to Claim 1, wherein the second clutch (5) and the third clutch (6) are arranged on a common axis of rotation.

3. The hybrid power module according to Claim 2, wherein the second clutch (5) and the third clutch (6) are connected to the first planetary carrier (32) via a common transmission shaft (11).

4. The hybrid power module according to Claim 3, wherein the first planetary gear mechanism (3), the first motor (4), the second clutch (5) and the third clutch (6) are sequentially arranged on a common axis of rotation, wherein the first motor (4) and the first sun gear (33) transmit power via a first hollow motor shaft (10), and the transmission shaft (11) extends through the first motor shaft (10) and the first motor (4).

5. The hybrid power module according to Claim 4, wherein a connection part for rotationally fixedly connecting the third clutch (6) to the second planetary carrier (72) is located radially inward of a connection part for rotationally fixedly connecting the second clutch (5) to the second ring gear (71).

6. The hybrid power module according to Claim 1, wherein the first planetary gear mechanism (3) and the second planetary gear mechanism (7) are arranged on a common axis of rotation.

7. The hybrid power module according to Claim 1, wherein the second clutch (5) and the third clutch (6) are arranged between the first planetary gear mechanism (3) and the second planetary gear mechanism (7).

8. The hybrid power module according to Claim 1, wherein the second planetary gear mechanism (7) and the second motor (8) are arranged on a common axis of rotation, and the second motor (8) is located on one side of the second planetary gear mechanism (7) away from the first planetary gear mechanism (3).

9. The hybrid power module according to Claim 8, wherein the second motor (4) and the second sun gear (73) transmit power via a second hollow motor shaft (15), and the transmission output shaft (13) extends through the second motor shaft (15) and the second motor (8).

10. A vehicle, wherein the vehicle has the hybrid power module according to any one of the preceding claims.

## Patentansprüche

1. Hybridleistungsmodul für ein Fahrzeug, umfassend ein Hybridgetriebe, einen ersten Motor (4) und einen zweiten Motor (8), wobei das Hybridgetriebe eine Getriebeeingangswelle (2), die mit einer Brennkraftmaschine (1) des Fahrzeugs verbunden ist, eine Getriebeausgangswelle (13), einen ersten Planetenradmechanismus (3), der mit der Getriebeeingangswelle (2) verbunden ist, einen zweiten Planetenradmechanismus (7), der mit der Getriebeausgangswelle (13) verbunden ist, und ein Getriebegehäuse umfasst; wobei der erste Planetenradmechanismus (3) ein erstes Sonnenrad (33), einen ersten Planetenträger (32) und ein erstes Hohlrad (31) umfasst; der zweite Planetenradmechanismus (7) ein zweites Sonnenrad (73), einen zweiten Planetenträger (72) und ein zweites Hohlrad (71) umfasst, wobei
die Getriebeeingangswelle (2) drehfest mit dem ersten Hohlrad (31) verbunden ist, Leistung zwischen dem ersten Motor (4) und dem ersten Sonnenrad (33) übertragen wird, Leistung zwischen dem zweiten Motor (8) und dem zweiten Sonnenrad (73) übertragen wird und die Getriebeausgangswelle (13) drehfest mit dem zweiten Planetenträger (72) verbunden ist,
wobei eine erste Kupplung (12), eine zweite Kupplung (5) und eine dritte Kupplung (6) in dem Hybridgetriebe bereitgestellt sind, wobei die erste Kupplung (12) das zweite Hohlrad (71) und das Getriebegehäuse einrücken oder ausrücken kann, die zweite Kupplung (5) den ersten Planetenträger (32) und das zweite Hohlrad (71) einrücken oder ausrücken kann und die dritte Kupplung (6) den ersten Planetenträger (32) und den zweiten Planetenträger (72) einrücken oder ausrücken kann.

2. Hybridleistungsmodul nach Anspruch 1, wobei die zweite Kupplung (5) und die dritte Kupplung (6) auf einer gemeinsamen Drehachse angeordnet sind.

3. Hybridleistungsmodul nach Anspruch 2, wobei die zweite Kupplung (5) und die dritte Kupplung (6) über eine gemeinsame Getriebewelle (11) mit dem ersten Planetenträger (32) verbunden sind.

4. Hybridleistungsmodul nach Anspruch 3, wobei der erste Planetenradmechanismus (3), der erste Motor (4), die zweite Kupplung (5) und die dritte Kupplung (6) nacheinander auf einer gemeinsamen Drehachse angeordnet sind, wobei der erste Motor (4) und das erste Sonnenrad (33) Leistung über eine erste Motorhohlwelle (10) übertragen und die Getriebewelle (11) sich durch die erste Motorwelle (10) und den ersten Motor (4) erstreckt.

5. Hybridleistungsmodul nach Anspruch 4, wobei ein Verbindungsteil zum drehfesten Verbinden der dritten Kupplung (6) mit dem zweiten Planetenträger (72) radial innerhalb eines Verbindungsteils zum drehfesten Verbinden der zweiten Kupplung (5) mit dem zweiten Hohlrad (71) angeordnet ist.

6. Hybridleistungsmodul nach Anspruch 1, wobei der erste Planetenradmechanismus (3) und der zweite Planetenradmechanismus (7) auf einer gemeinsamen Drehachse angeordnet sind.

7. Hybridleistungsmodul nach Anspruch 1, wobei die zweite Kupplung (5) und die dritte Kupplung (6) zwischen dem ersten Planetenradmechanismus (3) und dem zweiten Planetenradmechanismus (7) angeordnet sind.

8. Hybridleistungsmodul nach Anspruch 1, wobei der zweite Planetenradmechanismus (7) und der zweite Motor (8) auf einer gemeinsamen Drehachse angeordnet sind und der zweite Motor (8) auf einer Seite des zweiten Planetenradmechanismus (7) vom ersten Planetenradmechanismus (3) entfernt angeordnet ist.

9. Hybridleistungsmodul nach Anspruch 8, wobei der zweite Motor (4) und das zweite Sonnenrad (73) Leistung über eine zweite Motorhohlwelle (15) übertragen und die Getriebeausgangswelle (13) sich durch die zweite Motorwelle (15) und den zweiten Motor (8) erstreckt.

10. Fahrzeug, wobei das Fahrzeug das Hybridleistungsmodul nach einem der vorhergehenden Ansprüche aufweist.

## Revendications

1. Module d'alimentation hybride pour un véhicule, comprenant une transmission hybride, un premier moteur (4) et un second moteur (8), la transmission hybride comprenant un arbre d'entrée de transmission (2) relié à un moteur à combustion interne (1) du véhicule, un arbre de sortie de transmission (13), un premier mécanisme d'engrenage planétaire (3) relié à l'arbre d'entrée de transmission (2), un second mécanisme d'engrenage planétaire (7) relié à l'arbre de sortie de transmission (13) et un carter de transmission ; le premier mécanisme d'engrenage planétaire (3) comprenant une première roue solaire (33), un premier porte-satellites (32) et une première couronne dentée (31) ; le second mécanisme d'engrenage planétaire (7) comprend une seconde roue solaire (73), un second porte-satellites (72) et une seconde couronne dentée (71),
l'arbre d'entrée de transmission (2) étant solidaire en rotation de la première couronne dentée (31), la puissance étant transmise entre le premier moteur (4) et la première roue solaire (33), la puissance étant transmise entre le second moteur (8) et la seconde roue solaire (73) et l'arbre de sortie de transmission (13) étant solidaire en rotation du second porte-satellites (72),
un premier embrayage (12), un deuxième embrayage (5) et un troisième embrayage (6) étant prévus dans la transmission hybride, le premier embrayage (12) pouvant venir en prise dans la seconde couronne dentée (71) et dans le carter de transmission ou s'en dégager, le deuxième embrayage (5) pouvant venir en prise dans le premier porte-satellites (32) et dans la seconde couronne dentée (71) ou s'en désengager et le troisième embrayage (6) pouvant venir en prise dans le premier porte-satellites (32) et dans le second porte-satellites (72) ou s'en désengager.

2. Module d'alimentation hybride selon la revendication 1, dans lequel le deuxième embrayage (5) et le troisième embrayage (6) sont agencés sur un axe commun de rotation.

3. Module d'alimentation hybride selon la revendication 2, dans lequel le deuxième embrayage (5) et le troisième embrayage (6) sont reliés au premier porte-satellites (32) par le biais d'un arbre commun de transmission (11).

4. Module d'alimentation hybride selon la revendication 3, dans lequel le premier mécanisme d'engrenage planétaire (3), le premier moteur (4), le deuxième embrayage (5) et le troisième embrayage (6) sont agencés séquentiellement sur un axe commun de rotation, le premier moteur (4) et la première roue solaire (33) transmettant la puissance par le biais d'un premier arbre moteur creux (10) et l'arbre de transmission (11) s'étendant à travers le premier arbre moteur (10) et le premier moteur (4).

5. Module d'alimentation hybride selon la revendication 4, dans lequel une partie de liaison, permettant de solidariser en rotation le troisième embrayage (6) au second porte-satellites (72), est située radialement vers l'intérieur d'une partie de liaison pour solidariser en rotation le deuxième embrayage (5) à la seconde couronne dentée (71).

6. Module d'alimentation hybride selon la revendication 1, dans lequel le premier mécanisme d'engrenage planétaire (3) et le second mécanisme d'engrenage planétaire (7) sont agencés sur un axe commun de rotation.

7. Module d'alimentation hybride selon la revendication 1, dans lequel le deuxième embrayage (5) et le troisième embrayage (6) sont agencés entre le premier mécanisme d'engrenage planétaire (3) et le second mécanisme d'engrenage planétaire (7).

8. Module d'alimentation hybride selon la revendication 1, dans lequel le second mécanisme d'engrenage planétaire (7) et le second moteur (8) sont agencés sur un axe commun de rotation et le second moteur (8) est situé sur un côté du second mécanisme d'engrenage planétaire (7) à l'écart du premier mécanisme d'engrenage planétaire (3).

9. Module d'alimentation hybride selon la revendication 8, dans lequel le second moteur (4) et la seconde roue solaire (73) transmettent la puissance par le biais d'un second arbre moteur creux (15) et l'arbre de sortie de transmission (13) s'étend à travers le second arbre moteur (15) et le second moteur (8).

10. Véhicule, le véhicule ayant le module d'alimentation hybride selon l'une quelconque des revendications précédentes.
